# FASCICULE DE BREVET EUROPEEN

(11) **EP 0 881 111 B1**
(45) Date de publication et mention de la délivrance du brevet: **23.04.2003**
(21) Numéro de dépôt: 98401250.0
(22) Date de dépôt: 26.05.1998
(51) Int. Cl.: B60J 5/10

(54) **Ouvrant arrière de véhicule automobile comportant une platine de support d'accessoires**
Heckklappe für Kraftfahrzeug mit Trägerplatte für Zubehörteile
Hatchback door for motor vehicle comprising a support plate for accessories

(30) Priorité: 02.06.1997 FR 9706754
(43) Date de publication de la demande: 02.12.1998
(73) Titulaire: VALEO SYSTEMES D'ESSUYAGE, 78321 La Verrière (FR); VALEO SYSTEMES DE FERMETURES, 80970 Sailly-Flibeaucourt (FR)
(72) Inventeur: Eustache, Jean-Pierre, 92160 Antony (FR); Detais, Eric, 37000 Tours (FR); Goullieux, Alexandre, 80270 Airaines (FR); Girard, Joel, 80100 Abbeville (FR)
(74) Mandataire: Kohn, Philippe

(56) Documents cités:
- EP-A- 0 044 649
- EP-A- 0 111 457
- EP-A- 0 506 514
- DE-A- 3 815 442
- US-A- 4 119 341

## Description

L'invention concerne un ouvrant arrière de véhicule automobile comportant une platine de support d'accessoires.

De nombreux accessoires peuvent être fixés sur l'ouvrant arrière d'un véhicule automobile, notamment lorsqu'il s'agit d'un hayon arrière de grande dimension.

Ainsi, le hayon peut supporter, en plus de son système de fermeture et de verrouillage, un moteur électrique d'essuie-glace, une plaque d'immatriculation et ses systèmes d'éclairage, mais encore éventuellement le troisième feu "stop" réglementaire, voire même tout ou partie des blocs arrière de feux de signalisation.

Tous les accessoires, qui sont bien entendu produits indépendamment de la pièce de carrosserie que constitue le hayon, doivent donc être montés sur ce hayon lors de l'assemblage du véhicule.

Or, la multiplication des accessoires entraîne un accroissement du temps de montage et entraîne des risques multipliés de défaut de montage.

Par ailleurs, il est nécessaire de prévoir, pour chacun des accessoires électriques, d'une part l'alimentation électrique, d'autre part les moyens de commande de ces accessoires, et enfin des moyens de surveillance qui permettent notamment d'informer de l'état de fonctionnement des accessoires soit le conducteur, par exemple par l'intermédiaire de lampes-témoin au tableau de bord, soit une unité centrale de gestion électronique du véhicule.

Ces raccordements multiples, auxquels il est nécessaire de procéder sur la ligne de montage du véhicule, sont là encore des sources possibles de défaillances et il est donc nécessaire de les vérifier après le montage.

Comme on peut le voir, la multiplication des accessoires électriques portés par l'ouvrant arrière du véhicule peut conduire à un accroissement important du temps total d'assemblage de ce hayon.

Le document EP-A-0.506.514 décrit un hayon composite comportant un cadre qui délimite une ouverture dont une partie supérieure est destinée à être recouverte par une vitre et dont une partie inférieure est destinée à être recouverte par un module d'habillage qui porte à la fois la peau externe d'habillage du hayon et une partie des accessoires que l'on trouve généralement sur le hayon.

Comme cela est précisé dans le document cité, ce module a pour but de faciliter la réalisation de variantes de forme du hayon sans remettre en cause la structure porteuse de celui-ci qui est formée par le cadre.

Toutefois, ce document ne dit rien des moyens de positionnement des différents accessoires d'une part entre eux et d'autre part par rapport au hayon. Il n'est pas plus précisé comment se fait le positionnement du module par rapport au cadre du hayon et par rapport au reste du véhicule pour préserver l'aspect extérieur du hayon une fois assemblé. Enfin, rien n'est dit non plus des moyens de raccordement des accessoires à leurs circuits électriques d'alimentation et de commande.

Par conséquent, ce document enseigne un nouveau mode de conception modulaire de la constitution même du hayon mais ne propose pas d'innovation quant au montage des accessoires sur ce hayon.

Le document EP-A1-0.044.649 décrit et représente un ensemble de porte ou hayon arrière qui est constitué par un panneau de verre dépourvu de cadre, et donc sans structure propre, dont un bord est articulé directement sur un seuil de hayon du véhicule par l'intermédiaire des moyens d'articulation. Le long du bord opposé du panneau de verre, sur une face interne de celui-ci, est fixée une plaque de rigidification, notamment à l'aide d'un montage particulier du mécanisme de fermeture de l'ouvrant et du moteur d'essuie-glace, qui est fixé du côté intérieur de la plaque de rigidification.

Cette conception ne peut donc s'appliquer qu'à un ouvrant constitué d'un panneau de verre, et elle présente de surcroît l'inconvénient d'interdire un pré-assemblage de tous les accessoires sur la plaque de rigidification, puisqu'au moins une partie de ceux-ci participe à la fixation de la plaque de fixation sur le panneau de verre.

De surcroît, cette conception présente l'inconvénient de laisser apparent au moins un accessoire du côté intérieur de l'élément, en particulier le moteur d'essuie-glace.

De même, le document DE-A1-3.815.442 a pour but d'enseigner, dans le cadre d'un ouvrant constitué d'un panneau de verre, le montage d'accessoires sur une platine elle-même rapportée sur le panneau de verre. Cependant, hormis la simplicité de montage qui évite d'avoir à fixer ces accessoires sur un matériau aussi fragile que le verre, il n'est pas prévu de tirer d'avantage particulier de la possibilité de pré-assembler des accessoires sur la platine.

Notamment, il n'est nullement prévu dans ce document que la platine porte des moyens de raccordement des accessoires à des circuits électriques du véhicule. Ainsi, il n'est pas possible de pouvoir tester de manière simple l'ensemble des accessoires avant le montage de la platine sur l'ouvrant.

Ce document ne concerne donc lui aussi que la possibilité de monter de manière simple et fiable les accessoires sur un panneau d'ouvrant en verre.

L'invention a donc pour objet de proposer une nouvelle conception du montage des accessoires, notamment électriques, sur un ouvrant arrière de véhicule qui permette de réduire de manière importante le temps de montage du hayon pour le constructeur automobile tout en assurant une qualité de montage optimale vérifiée par des procédures de test simplifiées.

Dans ce but, l'invention propose un ouvrant arrière de véhicule automobile, du type dans lequel l'ouvrant porte une série d'accessoires et des moyens de raccordement des accessoires à des circuits électriques du véhicule pour l'alimentation, la commande et la surveillance des accessoires, et du type dans lequel une partie au moins des accessoires est pré-assemblée sur une platine de support qui est fixée sur l'ouvrant (du type selon EP-A-0 044 649), caractérisé en ce l'ouvrant est composé d'un panneau d'habillage externe et d'un élément interne structurel de renfort, notamment une tôle interne de renfort ou un assemblage tubulaire, et en ce que la platine de support est agencée du côté interne du panneau d'habillage externe de l'ouvrant.

Selon des modes de réalisation de l'invention :
- la platine de support comporte des moyens de positionnement et des moyens de fixation sur le hayon ;
- la platine de support comporte au moins deux parties qui sont susceptibles d'êtres déplacées l'une par rapport à l'autre, qui sont munies chacune de moyens de positionnement et de fixation sur le hayon, et qui portent chacune au moins un accessoire ;
- deux parties de la platine de support sont reliées par une zone déformable de la platine ;
- la platine comporte un corps principal et un corps auxiliaire qui sont reliés l'un à l'autre par un élément de liaison déformable ;
- la platine de support porte un moteur d'essuie-glace qui est fixé sur la platine par l'intermédiaire d'au moins un amortisseur de vibrations ;
- les moyens de raccordement de la platine de support comportent un connecteur centralisé unique ;
- les moyens de raccordement de la platine de support forment une liaison multiplex ;
- la platine de support porte un circuit électronique de commande des accessoires portés par la platine ;
- le fonctionnement des accessoires pré-assemblés est vérifié avant le montage de la platine de support sur l'ouvrant par l'intermédiaire des moyens de raccordement de la platine de support ;
- un accessoire est pré-assemblé sur la platine de support en vue de son transport, et il est ultérieurement fixé directement sur l'ouvrant après que la platine de support a été fixée sur l'ouvrant ;
- la platine de support porte au moins un accessoire qui est accessible depuis l'extérieur de l'ouvrant au travers d'une ouverture aménagée dans le panneau d'habillage externe de l'ouvrant ;
- la platine de support est fixée sur le panneau d'habillage externe de l'ouvrant ;
- l'ouvrant comporte une structure porteuse qui est articulée sur la caisse du véhicule, et sur laquelle est fixé le panneau d'habillage externe, et la platine de support est fixée sur la structure porteuse ;
- la platine de support est destiné à être recouverte, du côté intérieur, d'un capot d'habillage.

D'autres caractéristiques et avantages de l'invention apparaîtront à la lecture de la description détaillée qui suit pour la compréhension de laquelle on se reportera aux dessins annexés dans lesquels :
- la figure 1 est une vue extérieure d'un ouvrant arrière de véhicule automobile ;

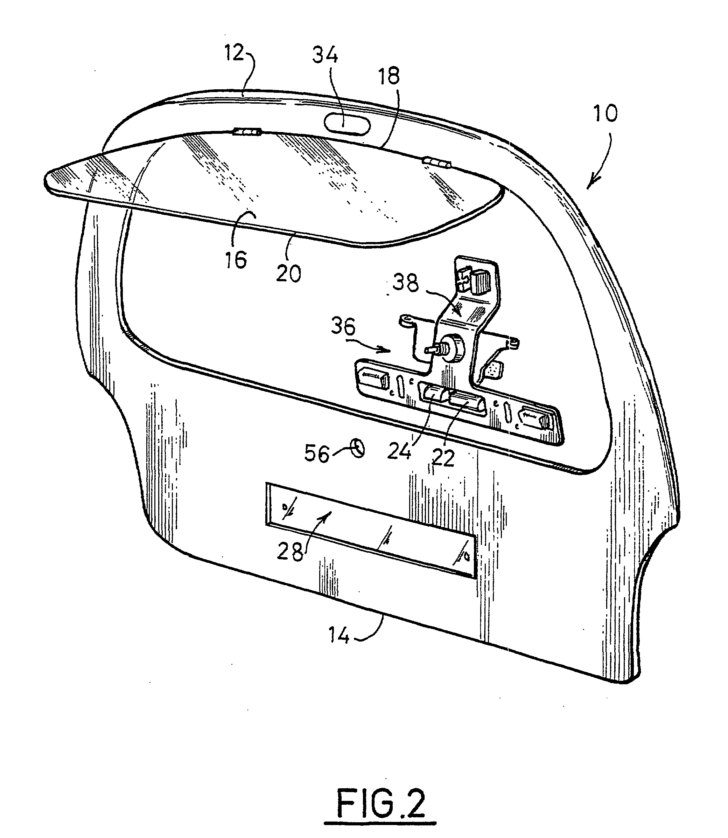

- la figure 2 est une vue schématique en perspective éclatée illustrant une platine de support d'accessoires destiné à être fixé sur un ouvrant arrière de véhicule automobile, du côté interne de celui-ci ;
- la figure 3 est une vue en perspective à plus grande échelle de la platine de support de la figure 2 ; et
- la figure 4 est une vue illustrant une autre platine selon l'invention après son montage sur un ouvrant de véhicule.

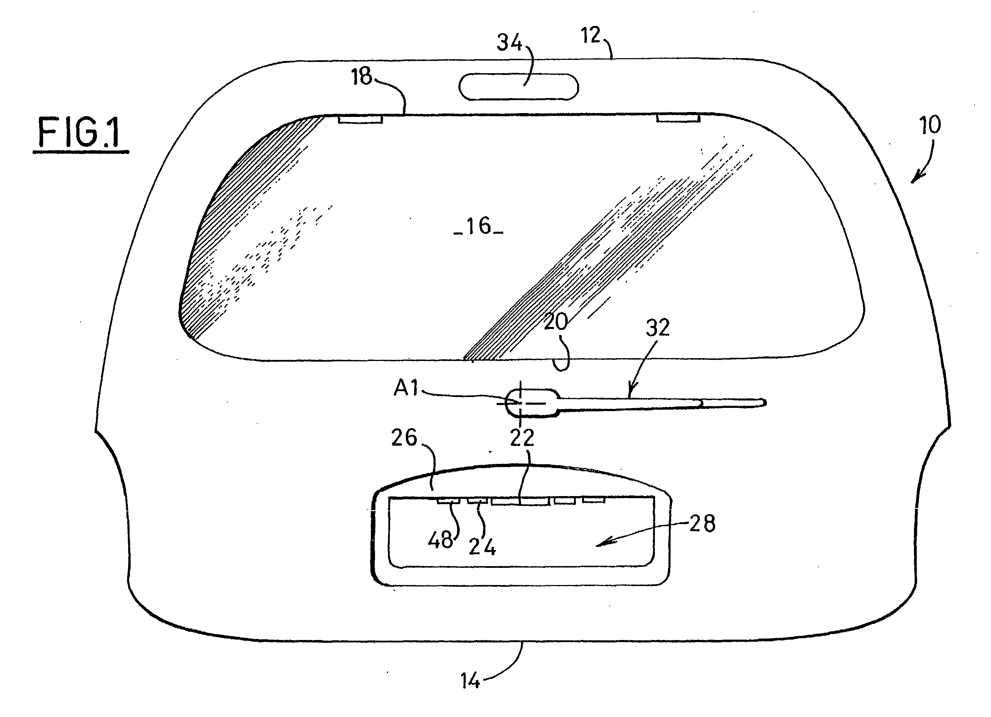

On a représenté sur la figure 1 une vue depuis l'extérieur d'un hayon arrière 10 de véhicule automobile. Le hayon 10 est par exemple destiné à être articulé par un bord horizontal supérieur 12 sur la caisse (non représentée) d'un véhicule automobile et doit donc être muni, au niveau de son bord inférieur 14, par exemple en position centrale, de moyens de verrouillage du hayon 10 sur la caisse afin d'assurer son maintien -en position fermée. Bien entendu, un tel hayon peut être articulé sur la caisse autour d'un axe vertical par un de ses bords latéraux, le bord latéral opposé portant alors les moyens de verrouillage.

Le hayon 10 porte une vitre 16 de lunette arrière qui est par exemple articulée sur le hayon 10 par son bord supérieur horizontal 18 de manière à pouvoir être écarté vers le haut vers une position ouverte indépendamment de l'ouverture du hayon 10.

Le hayon 10 doit donc être muni d'un dispositif de verrouillage de la vitre 16 qui coopère par exemple avec le bord inférieur 20 de celle-ci.

Bien entendu, le dispositif de verrouillage du hayon sur la caisse et de la vitre 16 sur le hayon 10 doivent pouvoir être commandés depuis l'extérieur par l'intermédiaire de deux organes de commande 22, 24 qui sont avantageusement en partie dissimulés par une casquette d'habillage 26 qui surplombe le bord supérieur d'un emplacement 28 pour une plaque d'immatriculation du véhicule. Cette casquette 26 peut aussi abriter des moyens d'éclairage 48 de la plaque d'immatriculation.

Le hayon 10 représenté sur les figures porte par ailleurs un dispositif d'essuyage de la vitre 16 qui comporte notamment un balai d'essuie-glace 32 qui est animé d'un mouvement de balayage rotatif alterné autour d'un axe A1 sensiblement perpendiculaire au plan de la vitre 16 et du hayon 10. Dans l'exemple représenté, l'essuie-glace 32 occupe une position de repos dans laquelle il s'étend sensiblement horizontalement en dessous du bord inférieur 20 de la vitre 16 de manière à ne pas entraver l'ouverture de cette dernière.

Le hayon 10 représenté porte aussi un feu de signalisation de freinage 34, aussi appelé feu "stop", qui complète, selon la réglementation, des blocs arrière de signalisation (non représentés) qui sont en l'occurrence portés par la caisse du véhicule mais qui peuvent tout aussi bien être, au moins en partie, portés par le hayon 10.

Ainsi, le hayon 10 représenté comporte une multitude d'équipements dont certains sont par ailleurs électriques et exigent de la sorte d'être reliés à des circuits électriques d'alimentation, de commande et de surveillance appartenant au véhicule.

Conformément aux enseignements de l'invention, les accessoires qui sont destinés à être portés par le hayon 10 sont pré-assemblés sur une platine de support 36 qui est destinée à être fixée sur le hayon 10.

Le hayon 10 peut être par exemple réalisé sous la forme d'une pièce en tôle emboutie, éventuellement composée d'un panneau d'habillage externe et d'une tôle interne de renfort, auquel cas la platine de support 36 est fixée directement sur le hayon, contre la face interne du panneau d'habillage externe.

Le hayon 10 peut être réalisé aussi sous la forme d'un cadre de support articulé sur la caisse du véhicule, par exemple réalisé sous la forme d'un assemblage tubulaire, sur lequel un panneau externe d'habillage, par exemple réalisé en matériau composite, est alors susceptible d'être fixé. Dans ce cas, on pourra préférer de fixer la platine de support 36 sur la structure de renfort, toujours du côté interne du panneau d'habillage externe.

Dans tous les cas, on pourra prévoir un capot d'habillage destiné à recouvrir la platine de support 36 du côté de l'intérieur du véhicule.

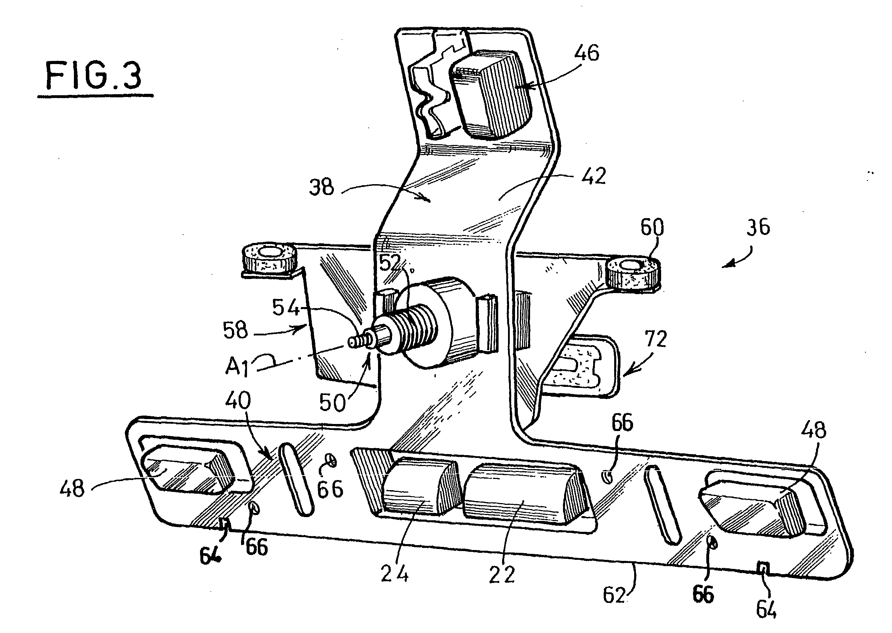

Dans l'exemple de réalisation de l'invention qui est plus particulièrement illustré sur la figure 3, la platine de support 36 selon l'invention comporte un corps principal 38 présentant un tronçon horizontal inférieur 40 et un tronçon vertical supérieur 42 qui forment un T inversé.

Le tronçon horizontal inférieur 40 porte notamment les deux organes de manoeuvre 22, 24 qui commandent respectivement les dispositifs de verrouillage 44, 46 du hayon 10 sur la caisse et de la vitre 16 sur le hayon 10. A ce titre, le tronçon inférieur 40 forme un élément de renfort de la rigidité du hayon et il permet de reprendre les efforts exercés sur le hayon pour le soulever vers sa position ouverte.

En l'espèce, les dispositifs de verrouillage 44, 46 sont des dispositifs à serrure électrique de sorte qu'il n'est pas besoin de prévoir des tringleries entre l'organe de manoeuvre et le dispositif de verrouillage correspondant, une simple liaison électrique étant nécessaire entre les deux.

Comme on peut le voir plus particulièrement sur la figure 3, le dispositif de verrouillage 46 de la vitre 16 est directement fixé sur la platine de support 36, en partie supérieure du tronçon vertical 42.

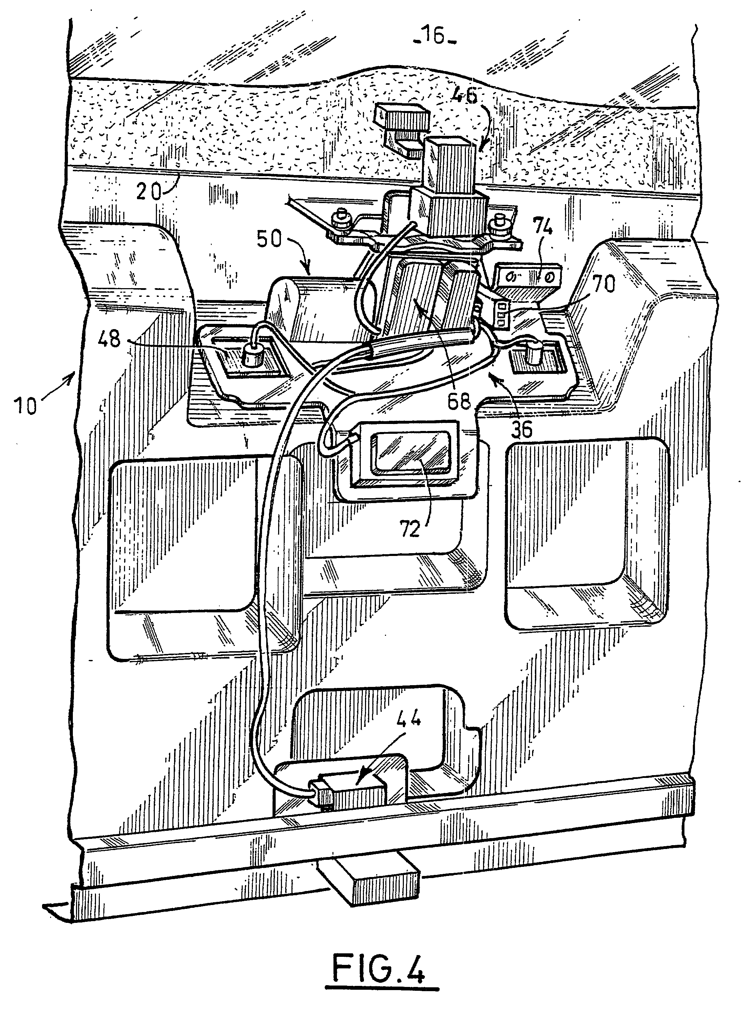

Au contraire, comme on peut le voir sur la figure 4, le dispositif de verrouillage 44 doit, pour assurer le verrouillage du hayon 10, être agencé au niveau du bord inférieur 14 de celui-ci. Or, pour ne pas augmenter inutilement l'encombrement de la platine de support 36, celle-ci est par exemple presque entièrement comprise entre le bord inférieur 20 de la vitre 16 et l'emplacement 28 de la plaque d'immatriculation.

Aussi, le dispositif de verrouillage 44 du hayon 10 est pré-assemblé sur une patte 74 de la platine de support 36 en vue de son transport et en vue de son raccordement électrique, notamment avec son organe de manoeuvre correspondant 22.

Lorsque la platine de support 36 est fixée sur le véhicule, il est alors possible de déplacer le dispositif de verrouillage 44 vers sa position finale dans laquelle il est par exemple fixé directement sur le hayon 10, au niveau du bord inférieur 14, sans avoir à réaliser une nouvelle opération de raccordement électrique qu'il serait ensuite nécessaire de tester.

De la même manière, on peut prévoir que le troisième feu "stop" 34 soit lui aussi pré-assemblé sur la platine de support 36, qu'il soit relié par un câble de longueur suffisante électriquement avec cette platine de support et qu'il soit ultérieurement fixé définitivement sur le hayon dans la position représentée sur les figures, au-dessus de la vitre 16.

Le tronçon inférieur 40 de la platine de support 36 comporte également, à chacune de ses extrémités transversales, les deux blocs d'éclairage 48 de la plaque d'immatriculation qui sont destinés à dépasser vers l'extérieur au travers de deux orifices correspondants aménagés dans le panneau extérieur du hayon. L'étanchéité autour des orifices sera avantageusement réalisée à l'aide de joints (non représentés) portés par le tronçon inférieur 40.

En position centrale sur la platine de support 36, on a prévu de fixer un dispositif d'entraînement 50 de l'essuie-glace 32. Le dispositif d'entraînement 50 comporte notamment un ensemble motoréducteur (non représenté) qui entraîne en rotation alternée un arbre d'entraînement 52 d'axe A1 dont une extrémité libre 54 est destinée à dépasser à l'extérieur du hayon 10, au travers d'une ouverture 56 aménagée dans celui-ci.

Bien entendu, la platine de support 36 selon l'invention peut aussi comporter d'autres accessoires tels qu'une lampe 72 d'éclairage de l'intérieur du coffre du véhicule ou tels qu'un dispositif de projection liquide de lavage en direction de la vitre 16, ce dispositif comportant par exemple un réservoir de liquide et une pompe.

Selon un aspect de l'invention, la platine 36 peut comporter plusieurs parties susceptibles de posséder un certain degré de liberté de positionnement l'une par rapport à l'autre.

En effet, certains des accessoires portés par la platine 36 nécessitent d'être positionnés de manière relativement précise par rapport à la peau extérieure du hayon 10 mais aussi par rapport à d'autres composants tels que la vitre 16.

Aussi, il peut être intéressant de prévoir que certains des accessoires soient fixés sur une partie de la platine qui soit susceptible d'être déplacée légèrement par rapport au reste de la platine 36 et qui comporte ses propres moyens de positionnement et de fixation sur le hayon 10.

Ainsi, au cours du montage de la platine 36 sur le hayon 10, chaque accessoire peut être positionné de manière indépendante et précise par rapport au hayon 10, sans qu'il ne soit nécessaire de définir des tolérances de positionnement trop serrées de chacun des accessoires sur la platine 36.

A cet effet, on peut prévoir que deux parties de la platine 36 soient réalisées venus de matière en une seule pièce et soient reliées par une zone déformable.

Avantageusement, si la platine 36 est réalisée sous la forme d'une tôle pliée ou emboutie, cette zone déformable peut être réalisée sous la forme d'une zone de la tôle repliée en accordéon pour pouvoir orienter aisément les deux parties de la platine 36 l'une par rapport à l'autre.

A titre d'exemple, on peut prévoir que la partie supérieure du tronçon vertical 42 du corps principal 38 de la platine 36 soit reliée au reste du tronçon vertical 42 par une zone déformable (non représentée) de manière à permettre un positionnement précis du -dispositif de verrouillage 46 de la vitre 16.

Cependant, chacune des parties du corps principal 38 de la platine 36 est munie de moyens qui permettent d'assurer son positionnement et sa fixation de manière rigide et précise sur le hayon 10.

Ainsi, comme on peut le voir sur la figure 3, le tronçon inférieur 40 est muni, sur son bord inférieur 62, de deux encoches 64 destinées à coopérer avec des ergots de positionnement (non représentés) du hayon, mais aussi de quatre perçages 66 pour le passage de vis de fixation (non représentées).

Dans le même but, le dispositif d'entraînement 50 de l'essuie-glace 32 est monté sur un corps auxiliaire 58 de la platine 36 qui est relié de manière souple au corps principal 38, c'est-à-dire avec une certaine possibilité de mouvement selon au moins une direction, par exemple par l'intermédiaire de dispositifs amortisseurs. Le corps auxiliaire 58 est donc susceptible d'être positionné de manière optimale par rapport à l'ouverture 56 du panneau d'habillage.

Comme on peut le voir sur les figures, le corps auxiliaire 58 comporte par ailleurs des moyens de fixation indépendants sur le hayon 10 qui comportent eux aussi des blocs amortisseurs 60. Ainsi, cette disposition évite aussi de transmettre au hayon 10 les vibrations qui sont susceptibles d'être générées au niveau de l'ensemble motoréducteur.

Selon l'invention, les différentes parties de la platine 36 doivent malgré tout former une entité suffisamment rigide et cohérente pour pouvoir être transportée et manutentionnée aisément.

Selon un autre aspect de l'invention, plus particulièrement visible dans la variante de réalisation de la figure 4, l'ensemble des- accessoires électriques qui sont portés par la platine de support 36 sont reliés par des moyens de raccordement centralisés avec des circuits d'alimentation, de commande et de surveillance du véhicule.

On prévoit avantageusement que la platine de support 36 comporte un circuit électronique local 68 qui gère l'ensemble des fonctionnalités de chacun des accessoires portés par la platine 36. Ainsi, ce circuit électronique local, qui est par exemple agencé près du moteur électrique du dispositif d'entraînement 50 de l'essuie-glace, sera à même de gérer notamment le fonctionnement de l'essuie-glace 32, ou le fonctionnement des dispositifs de verrouillage électrique 44, 46 du hayon 10 et de la vitre 16.

De plus, ce circuit électronique local permet de gérer les éventuelles interactions entre les différents accessoires. Ainsi, il est nécessaire de ne pas pouvoir commander l'ouverture de la vitre 16 tant que l'essuie-glace n'a pas atteint sa position de repos représentée sur la figure 1. Au contraire, il ne faut pas pouvoir mettre en route l'essuie-glace 32 si la vitre 16 est précédemment ouverte. Ces inhibitions peuvent être gérées par le circuit électronique local 68.

De même, le circuit électronique 68 porté par la platine de support 36 est susceptible d'être relié à une centrale électronique- du véhicule, agencée par exemple dans l'habitacle, par exemple afin d'assurer les fonctions d'antivol. Ainsi, la centrale électronique peut, après reconnaissance d'un signal codé, transmettre au circuit électronique de la platine de support 36 une information pour que celui-ci inhibe l'utilisation des organes de manoeuvre 22, 24 du hayon 10 et de la vitre 16. Ainsi, sans dispositif particulier supplémentaire, on assure l'inviolabilité de l'ouvrant arrière 10.

De préférence, le raccordement électrique de l'ensemble des accessoires portés par la platine de support 36 avec les circuits électriques du véhicule se fera au travers d'un connecteur unique 70. Ce raccordement se faisant par l'intermédiaire du circuit électronique local 68, ce dernier pourra gérer un raccordement multiplexé qui permet de diminuer le nombre de conducteurs physiques du faisceau électrique du véhicule.

Comme on le voit, le hayon 10 muni d'une platine de support 36 fixé sur l'ouvrant selon l'invention présente l'avantage que l'ensemble des fonctionnalités des accessoires portés par cet ouvrant 10 peut être testé avant le montage des accessoires sur le véhicule.

Ainsi, en plus du temps de montage épargné, les procédures de test du véhicule une fois monté s'en trouvent considérablement allégées. De même, le transport et la manutention de la platine ainsi équipée, depuis son lieu d'assemblage chez l'équipementier jusqu'à son lieu de montage sur le véhicule chez le constructeur automobile, se trouve facilité.

En termes de procédés industriels, le hayon selon l'invention permet au constructeur automobile qui effectue l'assemblage du véhicule de se consacrer à la mise en oeuvre des procédés de montage d'un ouvrant de type classique sur une caisse, procédés qui sont de sa maîtrise, avec pour seul souci les critères classiques de positionnement du panneau d'habillage externe de l'ouvrant par rapport au reste de la carrosserie.

L'opération d'installation des accessoires se limite alors à la fixation d'une platine pré-assemblée dont chaque partie comporte des moyens pour assurer automatiquement un positionnement précis des accessoires qu'elle porte, notamment par rapport au panneau d'habillage externe du hayon.

## Revendications

1. Ouvrant arrière de véhicule automobile, du type dans lequel l'ouvrant porte une série d'accessoires (32, 50, 34, 22, 24, 44, 46, 48) et des moyens de raccordement des accessoires à des circuits électriques du véhicule pour l'alimentation, la commande et la surveillance des accessoires, et du type dans lequel une partie au moins des accessoires est pré-assemblée sur une platine de support (36) qui est fixée sur l'ouvrant (10),
caractérisé en ce l'ouvrant est composé d'un panneau d'habillage externe et d'un élément interne structurel de renfort, notamment une tôle interne de renfort ou un assemblage tubulaire, et en ce que la platine de support (36) est agencée du côté interne du panneau d'habillage externe de l'ouvrant.

2. Ouvrant selon la revendication 1, **caractérisé en ce que** la platine de support (36) comporte des moyens de positionnement et des moyens de fixation sur l'ouvrant (10).

3. Ouvrant selon la revendication 2, **caractérisé en ce que** la platine de support (36) comporte au moins deux parties qui sont susceptibles d'êtres déplacées l'une par rapport à l'autre, qui sont munies chacune de moyens de positionnement et de fixation sur l'ouvrant (10), et qui portent chacune au moins un accessoire.

4. Ouvrant selon la revendication 3, **caractérisé en ce que** deux parties de la platine de support sont reliées par une zone déformable de la platine (36).

5. Ouvrant selon la revendication 3, **caractérisé en ce que** la platine (36) comporte un corps principal (38) et un corps auxiliaire (58) qui sont reliés l'un à l'autre par un élément de liaison déformable.

6. Ouvrant selon la revendication 5, **caractérisé en ce que** la platine de support (36) porte un moteur d'essuie-glace qui est fixé sur la platine (36) par l'intermédiaire d'au moins un amortisseur de vibrations.

7. Ouvrant selon l'une quelconque des revendications précédentes, **caractérisé en ce que** les moyens de raccordement de la platine de support (36) comportent un connecteur centralisé unique.

8. Ouvrant selon la revendication 7, **caractérisé en ce que** les moyens de raccordement de la platine de support (36) forment une liaison multiplex.

9. Ouvrant selon l'une quelconque des revendications précédentes, **caractérisé en ce que** la platine de support (36) porte un circuit électronique de commande des accessoires portés par la platine (36).

10. Ouvrant selon l'une quelconque des revendications précédentes, **caractérisé en ce que** le fonctionnement des accessoires pré-assemblés est vérifié avant le montage de la platine de support (36) sur l'ouvrant (10) par l'intermédiaire des moyens de raccordement de la platine de support (36).

11. Ouvrant selon l'une quelconque des revendications précédentes, **caractérisé en ce qu'**un accessoire (44, 34) est pré-assemblé sur la platine de support (36) en vue de son transport, et **en ce qu'**il est ultérieurement fixé directement sur l'ouvrant (10) après que la platine de support (36) a été fixée sur l'ouvrant (10).

12. Ouvrant selon l'une quelconque des revendications précédentes, **caractérisé en ce que** la platine de support (36) porte au moins un accessoire (22, 24, 52) qui est accessible depuis l'extérieur de l'ouvrant (10) au travers d'une ouverture (56) aménagée dans le panneau d'habillage externe de l'ouvrant (10).

13. Ouvrant selon l'une quelconque des revendications précédentes, **caractérisé en ce que** la platine de support (36) est fixée sur le panneau d'habillage externe de l'ouvrant (10).

14. Ouvrant selon l'une quelconque des revendications 1 à 12, **caractérisé en ce que** l'ouvrant (10) comporte une structure porteuse qui est articulée sur la caisse du véhicule, et sur laquelle est fixé le panneau d'habillage externe, et **en ce que** la platine de support (36) est fixée sur la structure porteuse.

15. Ouvrant selon l'une quelconque des revendications précédentes, **caractérisé en ce que** la platine de support (36) est destiné à être recouverte, du côté intérieur, d'un capot d'habillage.

## Claims

1. A rear door for a motor vehicle, of the type in which the door carries a series of accessories (32, 50, 34, 22, 24, 44, 46, 48) and means for connecting the accessories to electrical circuits of the vehicle for the power supply, control and monitoring of the accessories, and of the type in which at least part of the accessories is pre-assembled on a support plate structure (36) which is fixed on the door, **characterised in that** the door consists of an outer cladding panel and an inner reinforcing sheet or a tubular assembly, and **in that** the support plate structure (36) is arranged on the inner side of the outer cladding panel of the door.

2. A door according to Claim 1, **characterised in that** the support plate structure (36) includes positioning means and means for fastening it on the door (10).

3. A door according to Claim 2, **characterised in that** the support plate structure (36) comprises at least two parts which are adapted to be displaced one with respect to the other, and each of which is provided with means for positioning and fastening it on the door (10), each said part carrying at least one accessory.

4. A door according to Claim 3, **characterised in that** two parts of the support plate structure are joined together by a deformable zone of the plate structure (36).

5. A door according to Claim 3, **characterised in that** the plate structure (36) includes a main body (38) and an auxiliary body (58), which are joined together through a deformable connecting element.

6. A door according to Claim 5, **characterised in that** the support plate structure (36) carries a screen wiper motor which is fixed on the plate structure (36) through at least one vibration damper.

7. A door according to any one of the preceding Claims, **characterised in that** the connecting means of the support plate structure (36) comprise a single centralised connector.

8. A door according to Claim 7, **characterised in that** the connecting means of the support plate structure (36) define a multiplex connection.

9. A door according to any one of the preceding Claims, **characterised in that** the support plate structure (36) carries an electronic circuit for control of the accessories carried by the plate structure (36).

10. A door according to any one of the preceding Claims, **characterised in that** the operation of the pre-assembled accessories is verified before the support plate structure (36) is fitted on the door (10), through the connecting means of the support plate structure (36).

11. A door according to any one of the preceding Claims, **characterised in that** an accessory (44, 34) is pre-assembled on the support plate structure (36) for the purpose of its transport, and **in that** it is subsequently fixed directly on the door (10) after the support plate structure (36) has been fixed on the door (10).

12. A door according to any one of the preceding Claims, **characterised in that** the support plate structure (36) carries at least one accessory (22, 24, 52) which is accessible from outside the door (10) through an aperture (56) formed in the outer cladding panel of the door (10).

13. A door according to any one of the preceding Claims, **characterised in that** the support plate structure (36) is fixed on the outer cladding panel of the door (10).

14. A door according to any one of Claims 1 to 12, **characterised in that** the door (10) includes a bearer structure which is articulated on the body of the vehicle, and on which the outer cladding panel is fixed, and **in that** the support plate structure (36) is fixed on the bearer structure.

15. A door according to any one of the preceding Claims, **characterised in that** the support plate structure (36) is adapted to be covered on its inner side with a cladding cover piece.

## Patentansprüche

1. Heckklappe eines Kraftfahrzeugs, wobei die Heckklappe eine Reihe von Zubehörteilen (32, 50, 34, 22, 24, 44, 46, 48) und Anschlußmittel für den Anschluß der Zubehörteile an elektrische Stromkreise des Fahrzeugs für die Stromversorgung, die Steuerung und die Überwachung der Zubehörteile trägt und wobei wenigstens ein Teil der Zubehörteile auf einer Trägerplatte (36) vormontiert ist, die an der Heckklappe (10) befestigt ist,
**dadurch gekennzeichnet, daß** die Heckklappe aus einer Außenverkleidung und aus einem strukturellen inneren Verstärkungselement, insbesondere aus einem inneren Verstärkungsblech oder aus einer Rohrverbindung, besteht, und daß die Trägerplatte (36) auf der Innenseite der Außenverkleidung der Heckklappe angeordnet ist.

2. Heckklappe nach Anspruch 1, **dadurch gekennzeichnet, daß** die Trägerplatte (36) Mittel zur Positionierung und Mittel zur Befestigung an der Heckklappe (10) umfaßt.

3. Heckklappe nach Anspruch 2, **dadurch gekennzeichnet, daß** die Trägerplatte (36) wenigstens zwei Teile umfaßt, die im Verhältnis zueinander verschiebbar sind, die jeweils mit Mitteln zur Positionierung und zur Befestigung an der Heckklappe (10) versehen sind und die jeweils wenigstens ein Zubehörteil tragen.

4. Heckklappe nach Anspruch 3, **dadurch gekennzeichnet, daß** zwei Teile der Trägerplatte durch einen verformbaren Bereich der Trägerplatte (36) verbunden sind.

5. Heckklappe nach Anspruch 3, **dadurch gekennzeichnet, daß** die Trägerplatte (36) einen Hauptkörper (38) und einen Hilfskörper (58) umfaßt, die durch ein verformbares Verbindungselement miteinander verbunden sind.

6. Heckklappe nach Anspruch 5, **dadurch gekennzeichnet, daß** die Trägerplatte (36) einen Scheibenwischermotor trägt, der über wenigstens einen Schwingungsdämpfer an der Trägerplatte (36) befestigt ist.

7. Heckklappe nach einem der vorangehenden Ansprüche, **dadurch gekennzeichnet, daß** die Anschlußmittel der Trägerplatte (36) einen einzigen Zentralverbinder umfassen.

8. Heckklappe nach Anspruch 7, **dadurch gekennzeichnet, daß** die Anschlußmittel der Trägerplatte (36) eine Multiplexverbindung bilden.

9. Heckklappe nach einem der vorangehenden Ansprüche, **dadurch gekennzeichnet, daß** die Trägerplatte (36) eine elektronische Steuerschaltung zur Steuerung der an der Trägerplatte (36) angebrachten Zubehörteile trägt.

10. Heckklappe nach einem der vorangehenden Ansprüche, **dadurch gekennzeichnet, daß** die Funktionsweise der vormontierten Zubehörteile vor der Montage der Trägerplatte (36) an der Heckklappe (10) über die Anschlußmittel der Trägerplatte (36) überprüft wird.

11. Heckklappe nach einem der vorangehenden Ansprüche, **dadurch gekennzeichnet, daß** ein Zubehörteil (44, 34) im Hinblick auf seinen Transport auf der Trägerplatte (36) vormontiert und später direkt an der Heckklappe (10) befestigt wird, nachdem (36) die Trägerplatte an der Heckklappe (10) befestigt worden ist.

12. Heckklappe nach einem der vorangehenden Ansprüche, **dadurch gekennzeichnet, daß** die Trägerplatte (36) wenigstens ein Zubehörteil (22, 24, 52) trägt, das von außerhalb der Heckklappe (10) durch eine in die Außenverkleidung der Heckklappe (10) eingearbeitete Öffnung (56) zugänglich ist.

13. Heckklappe nach einem der vorangehenden Ansprüche, **dadurch gekennzeichnet, daß** die Trägerplatte (36) an der Außenverkleidung der Heckklappe (10) befestigt ist.

14. Heckklappe nach einem der Ansprüche 1 bis 12, **dadurch gekennzeichnet, daß** die Heckklappe (10) eine Tragstruktur umfaßt, die an der Karosserie des Fahrzeugs angelenkt ist und an der die Außenverkleidung befestigt ist, und daß die Trägerplatte (36) an der Tragstruktur befestigt ist.

15. Heckklappe nach einem der vorangehenden Ansprüche, **dadurch gekennzeichnet, daß** die Trägerplatte (36) dazu bestimmt ist, auf der Innenseite mit einer Verkleidungsabdeckung abgedeckt zu werden.
